Europäisches Patentamt

European Patent Office

Office européen des brevets

(11) Publication number: **0 106 555**
A2

# EUROPEAN PATENT APPLICATION

(21) Application number: 83305543.7

(22) Date of filing: 20.09.83

(51) Int. Cl.³: **A 22 B 5/08**

(30) Priority: 20.09.82 DK 4172/82

(43) Date of publication of application:
25.04.84 Bulletin 84/17

(84) Designated Contracting States:
DE GB NL SE

(71) Applicant: Slagteriernes Forskningsinstitut
Maglegaardsvej 2
DK-4000 Roskilde(DK)

(72) Inventor: Petersen, Olfert Helge
Sondergaardsvej 3 Allerslev
DK-4320 Lejre(DK)

(72) Inventor: Aabo, Preben
Gosbanevej 5
DK-2600 Glostrup(DK)

(74) Representative: Alexander, Thomas Bruce et al,
Boult, Wade & Tennant 27 Furnival Street
London EC4A 1PQ(GB)

(54) Scraping device for a scraping machine.

(57) A scraping device for a rotating machine for the scraping of carcass surfaces comprising one or more arms (20), the free end of which is provided with a scraping edge, and the opposite end of which is hinged to the machine. Around the pivot (24) of the hinge there is a spring (26), which is placed in such a way and which is provided with such a pre-tension, that one end of the spring acts on the arm, urging it towards an initial scraping position. The other end of the spring is firmly attached to the machine. On the latter there is a stop (25) against which the arm rests in its initial scraping position.

In the scraping device the spring may be so dimensioned that it has a long working life and at the same time provides a constant contact pressure against the carcass within predetermined limits.

FIG. 2

EP 0 106 555 A2

## SCRAPING DEVICE FOR A SCRAPING MACHINE

A scraping device for a scraping machine, in particular for scraping the surface of a carcass.

The present invention relates to a scraping device for a scraping machine, in particular for scraping the surface of carcasses, comprising one or more arms, the free ends of which each are provided with a scraping edge.

Scraping machines are used in bacon factories for cleaning the rind of carcasses of impurities, bristles, loose skin segments, material charred by singeing, etc. The machines are provided with a number of protruding, oblong, elastic scraping blades, the free ends of which scrape along the surface of the carcass with a force corresponding to the degree of backward bend of the blades. Within certain limits it is possible to vary the scraping result by changing the distance between the surface to be cleaned and the machine.

In bacon factories it is common to-day to apply a high force on the blades to ensure adequate scraping. The disadvantage is that the scraping blades are exposed to such a great stress that they break after a comparatively short time, which is inconvenient because the efficiency of the scraping machine hereby is reduced and because replacement of the broken blades with new ones is costly in working time and materials.

It is therefore the object of the present invention to provide a scraping device which is considerably more durable than the above mentioned scraping arrangements, and at least as effective.

This is achieved by means of a scraping device which is characterized in that the arms are hinged to a bracket for fastening of the scraping device to the machine, and in that around the pivot of the hinge there is a helical spring which is placed in such a way and provided with such a pre-tension, that one end of the spring acts on the arm, moving it towards the initial scraping position, whereas the other end of the spring is firmly attached to bracket said bracket having stop devices or areas against which the arm rests in the mentioned initial scraping position.

The advantage of designing the scraping device in the described way with a pre-tension of the arm is that the spring can be so dimensioned that you obtain a long working life, as well as a sufficient contact pressure against the carcass which varies within certain limits in the working range of the arm. The spring is subjected to easily defined and adjustable forces, and the characteristic of and pre-tension of the spring within the working range in question will have the effect that an effective scraping is obtained along the whole surface being scraped by each individual scraping arm according to the invention.

As opposed hereto scraping with the existing scraping blades is only effective over a part of the scraped surface as the contact pressure of these known scraping blades is zero at the start of the scraping operation, and only after a certain scraping travel they have achieved a contact pressure which is sufficiently high. Accordingly, in these apparatuses there is a risk of the rind surface being damaged and of the blades being broken when the scraping blades during part of their travel are necessarily subjected to a large force in order to ensure adequate scraping.

The spring is preferably designed to ensure that its pre-tension is between 1/10 and 5/10 of the spring tension at the final working position of the arm.

The spring may have a pre-tension corresponding to a force of 3-5 N at the free end of the arm in the initial scraping position of the arm . In this way effective scraping is promptly achieved through the contact between the scraper end and the rind surface.

The spring may be so dimensioned that there is an active force at the end of the arm of 15-30 N when the arm is in its final working position . Damaging of the rind surface is thereby avoided and at the same time an effective scraping in the full working length of the scraping arm is achieved.

In an advantageous embodiment of the scraping device according to the invention means are provided for adjustment of the pre-tension of the spring . Hence it is possible to a certain extent to adapt the scraping efficiency to the actual needs and to use the same type of scraping device for the scraping of various more or less sensitive parts of the carcass.

One end of the spring may thus expediently be retained in the pivot which via an adjustable locking device is fastened to the hinge unit belonging to the mentioned spring end . It will hereby be possible, following release of the locking device, to adjust the pre-tension by turning the pivot.

The arm of the scraping device may be completely rigid, so that the scraping force orginates entirely from the helical spring of the hinge .

The advantage of this is that the scraping edge will always be in a plane which is parallel to the axis of the pivot, as there will be no tipping or tilting of the arm. In this way you avoid the cuts or gashes sometimes found on carcasses treated in conventional scraping machines.

When the arm is designed with a scraping edge having a greater width than the arm it will be easier for the latter to work in hard-to-reach areas such as arm pits.

Such a design of the arm may be obtained by means of a roundel with a hole in the middle which is fastened to the free end of the arm. The scraping edge along the peripheri of the roundel ensures furthermore a very speedy way of obtaining a fresh, sharp edge by loosening the roundel, turn it and fasten it again.

The devices or the areas serving as a stop for the arm in the initial pre-tensioned position are made of or fitted with a suitable yielding material, like rubber. The noise level of the scraping machine is thereby reduced, and the hinge bearings subjected to a reduced amount of force.

In the scraping device according to the invention several arms may be hinged side by side onto a joint pivot . -           This permits a particularly compact embodiment.     Several   of such pivots may be  fastened to two  circular  flanges  along  their circumference, and between the flanges there may furthermore be rods placed parallel to the' pivots, to which one end of the spring is fastened at the same time as they are placed as a stop for the arm in its foremost pre-tensioned position.

As it appears the scraping device of the invention may be applied in many of the known scraping machines found in bacon factories to-day such as devices for scraping of neck, groin, belly, ham and snout as well as in scrapers for whole carcasses.

In one design of the scraping device each conventional scraping blade may simply be replaced by a scraper device according to the invention. It will then be possible to use the machines already installed in the bacon factory and even at the same time to take one or more of the remaining scraping machines out of service because the scraping device of the invention may be adjusted to give a more uniform and effective scraping than the scraping blades used hitherto. At the same time the scraping efficiency is more reliable and uniform.

The scraping device according to the invention may - with just as good a performance - be applied in new scraping machines, but in that case it would be better to design a whole mill-like unit provided with several arms which unit may be attached to the shaft of existing scraping machine engines.

A more detailed description of the invention is given on the following pages in conjunction with the drawing where

Figure 1 shows a first embodiment of the scraping device according to the invention, and

Figure 2 this scraping device seen from the side, and partly in cross section,

Figure 3 a second embodiment of the scraping device according to the invention, and

Figure 4 this scraping device seen in a cross section as marked by line 4-4 in Figure 3.

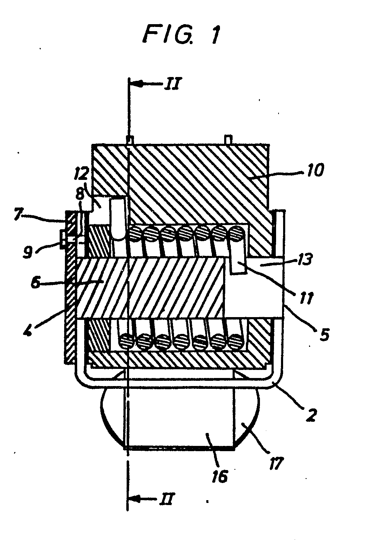

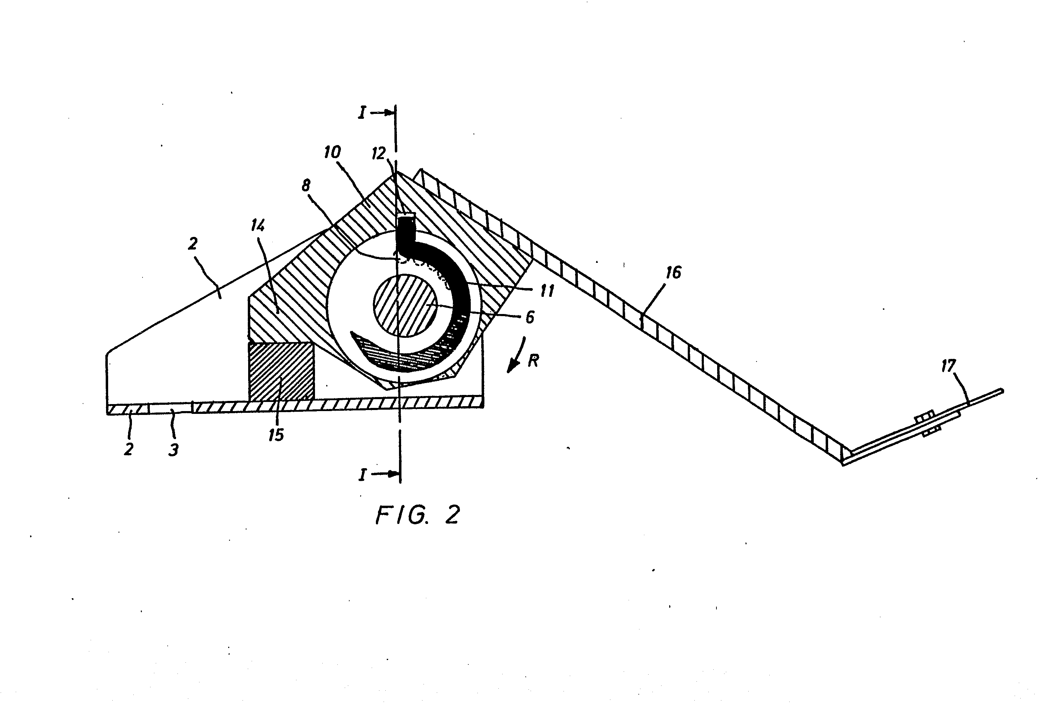

In Figures 1 and 2 the scraping device has a U-shaped bracket (2). The bracket is provided with a hole (3) corresponding to the hole or the slit of a conventional scraping blade. The scraping device may therefore immediately be attached to a scraping "mill" in replacement of the known scraper blade. The side walls of the bracket are provided with two holes (4) and (5) in which a pivot (6) is inserted and the pivot in one end is provided with a larger co-axial disc (7). In the disc there is a number of holes (8) at the same radial distance from the pivot axis. The corresponding side wall of the bracket has a threaded hole at the same distance from the pivot axis. A bolt (9) projecting through one of the holes (8) and into the threaded hole holds disc (7) and pivot (6) in a fixed position.

On pivot (6) a pivotal housing (10) made of polyamide has been fitted. In the housing there is a stainless steel helical spring (11) encircling the pivot (6) and resting in the one end in a recess (12) of the housing. The other end of the spring projects into a slit (13) located at the free end of the pivot.

As it appears from Figure 2 the housing (10) has a projection (14) which in the position shown prevents the housing from turning against the arrow (R), as bracket (2) contains a rubber pad (15) serving as a stop.

On top of the housing a rigid arm (16) with a U-shaped cross section has been fastened by means of two non-shown screws. On the free end of arm (16) a thin roundel (17) is fastened, the diameter of which is greater than tne width of the arm (16).

The pre-tension of the helical spring (11) may be adjusted by means of the disc (7) by turning this disc until the required force has been obtained at the free end of the arm. Next, disc (7) is locked into this position by means of the bolt (9).

When the scraping device is attached to a scraping "mill" it will already in the initial scraping position shown in Figure 2 be capable of carrying out effective scraping, whereas an ordinary scraping blade is essentially inactive in its starting position. As the scraping device is moving along the carcass the arm is pressed back in the direction of the arrow (R) against the spring force.

The pre-tension of the spring may, for example, correspond to a force of 3-5 N at the free arm end in the initial scraping position of the arm, and the spring may moreover be so dimensioned that a force of 15-30 N acts on the end of the arm when the arm is in its final scraping position (here 70° from the initial position). It will be seen that there is a considerably smaller variation in the scraping force than the one known from conventional scraping blades, resulting in lesser damage to the rind and a less critical adjustment of the scraping machine's distance to the carcass, among other things.

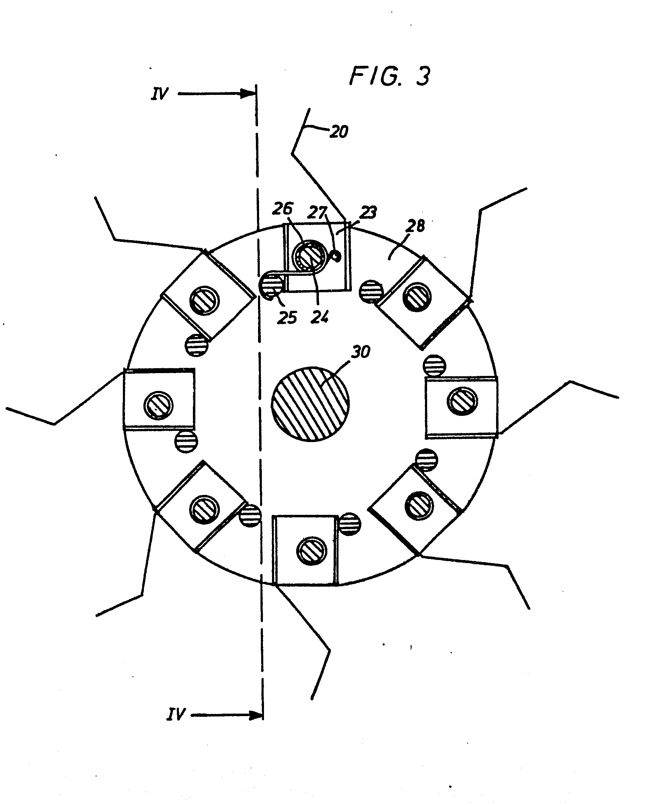

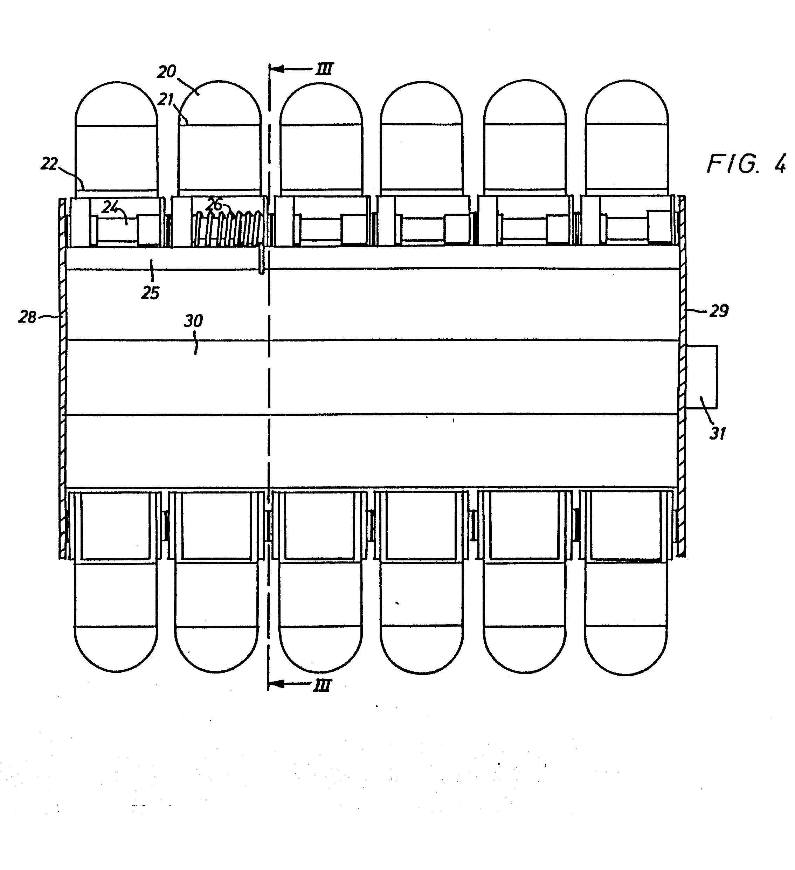

The foreleg scraper for pig's carcasses shown in Figures 3 and 4 contains scraping blades (20) bent around the lines (21) and (22). The blades are fastened in individual blade holders (23) which are able to pivot independently of each other around a common shaft (24). A rod (25) serves as a stop for blade holders (23).

In each of the holders (23) a helical spring (26) is arranged around the shaft (24) and one end of the spring is bent around the rod (25) while the other end holds on to a stud (27) fastened in the blade holder (23). The spring acts in this way on the blade holder (23), and hence on the scraping blade (20) in clockwise direction (Figure 3), and it is so dimensioned and pre-stressed that the contact pressure of the scraping blade against a rind surface is around 5 N in the position shown. Rods (24) and (25) are fastened in two circular flanges (28 and 29) carrying a central shaft (30) with a connecting piece (31) for mounting of the scraper on a non-shown geared engine.

When operating, the scraper of the design shown rotates clockwise, for instance with a velocity of approx. 30 r.p.m.

Even when irregular rind surfaces are being scraped, a fairly constant scraping pressure is applied which is determined by the tension of the spring and the back swing of the blade component.

Areas which are hard to scrape satisfactorily by conventional scraping machines are cleaned completely with this foreleg scraper.

The invention includes a scraping machine equipped with one or more scraping devices as described above.

CLAIMS:

1. A scraping device for a scraping machine comprising an arm (16) bearing a scraping edge which arm (16) is mounted for pivotal movement on a support (6) and provided with pretensioned resilient means (11) opposing said pivotal movement.

2. A scraping device for a scraping machine, in particular for the scraping of carcass surfaces, comprising one or more arms (16), the free ends of which are provided with a scraping edge, c h a r a c t e r- i z e d in that the arms are hinged to a bracket (2) for fastening of the scraping device in the machine, and in that around the pivot (6) of the hinge there is a helical spring (11) which is placed in such a way and provided with such a pre-tension, that one end of the spring acts on the arm, moving it towards the initial scraping position, whereas the other end of the spring is firmly attached to bracket (2), said bracket having stop devices or areas (15) against which the arm rests in the mentioned initial scraping position.

3. A scraping device according to claim 2, c h a r a c t e r i z e d in that the spring (11) is so designed that its pre-tension is 1/10 to 5/10 of the spring tension in the final working position of the arm.

4. A scraping device according to claims 2-3, c h a r a c t e r- i z e d in that the spring has a pre-tension corresponding to a force of 3-5 N on the free arm end in the initial position of the arm.

5. A scraping device according to claim 4, c h a r a c t e r i z e d in that the spring is so dimensioned that a force of 15-30 N acts on the end of the arm, when the arm is in its final scraping position.

6. A scraping device according to claims 2-5, c h a r a c t e r- i z e d in that means (8, 9) are provided for adjustment of the pre-tension of the spring.

7 . A scraping device according to claim 6, c h a r a c t e r i z e d in that one end of the spring is retained in the pivot (6), and that said pivot via an adjustable locking device (7, 8, 9) is attached to the hinge unit belonging to the mentioned spring end.

8. A scraping device according to claims 2-7, c h a r a c t e r- i z e d  in that the arm (16) is in rigid design.

9 . A scraping device according to claims 2-8, c h a r a c t e r- i z e d  in that several arms are hinged side by side on a joint pivot.

10. A scraping device according to claim 9, c h a r a c t e r i z e d in that several such pivots are fastened to two circular flanges along the circumference of the flanges, and in that between the flanges there are rods placed parallel to the pivots, to which rods one end of the spring is fastened, at the same time as they serve as stops for the arm in its initial position under pre-tension.

## FIG. 1

FIG. 2

FIG. 3

FIG. 4